Europäisches Patentamt

European Patent Office

Office européen des brevets

(19)

‖‖‖‖‖‖‖‖‖‖‖‖‖‖‖‖‖‖‖‖‖‖‖‖‖‖‖‖‖‖‖

(11) Numéro de publication : **0 433 975 B1**

# (12) FASCICULE DE BREVET EUROPEEN

(45) Date de publication du fascicule du brevet :
**30.03.94 Bulletin 94/13**

(51) Int. Cl.⁵ : **H02M 3/315**

(21) Numéro de dépôt : **90124574.6**

(22) Date de dépôt : **18.12.90**

(54) **Circuit d'alimentation électrique d'une charge telle qu'un magnétron.**

(30) Priorité : **22.12.89 FR 8917144**
**19.01.90 FR 9000647**

(43) Date de publication de la demande :
**26.06.91 Bulletin 91/26**

(45) Mention de la délivrance du brevet :
**30.03.94 Bulletin 94/13**

(84) Etats contractants désignés :
**DE ES GB IT NL SE**

(56) Documents cités :
**EP-A- 0 202 579**
**US-A- 4 069 449**
**US-A- 4 318 165**

(73) Titulaire : **MOULINEX**
**11, rue Jules-Ferry**
**F-93171 Bagnolet (FR)**

(72) Inventeur : **Dauge, Gilbert**
**Moulinex, 2, rue de l'Industrie**
**F-14123 Cormelles-Le-Royal (FR)**

(74) Mandataire : **May, Hans Ulrich, Dr.**
**Patentanwalt Dr.H.U.May, Thierschstrasse 27**
**D-80538 München (DE)**

EP 0 433 975 B1

Jouve, 18, rue Saint-Denis, 75001 PARIS

**Description**

La présente invention se rapporte a un circuit d'alimentation en tension continue ou redressée destiné à alimenter une charge unidirectionnelle en courant telle que, par exemple, un magnétron et comprenant un transformateur élévateur de tension à inductance de fuite élevée dont l'enroulement primaire est monté en série avec un élément de commutation destiné à hacher ladite tension à une certaine fréquence en réponse à une impulsion de commande appliquée à une gâchette dudit élément de commutation, et dont l'enroulement secondaire est destiné à être relié à ladite charge, ainsi qu'un condensateur branché en parallèle audit enroulement primaire.

On connaît déjà des circuits, tels que par exemple celui décrit dans le brevet US 4318165 de General Electric Company, qui nécessitent un élément de commutation très surdimensionné, et un transformateur capable de supporter des pointes de courant importantes. En outre, le courant dans la charge présente des pointes qui sont difficilement tolérées par un magnétron de four électroménager.

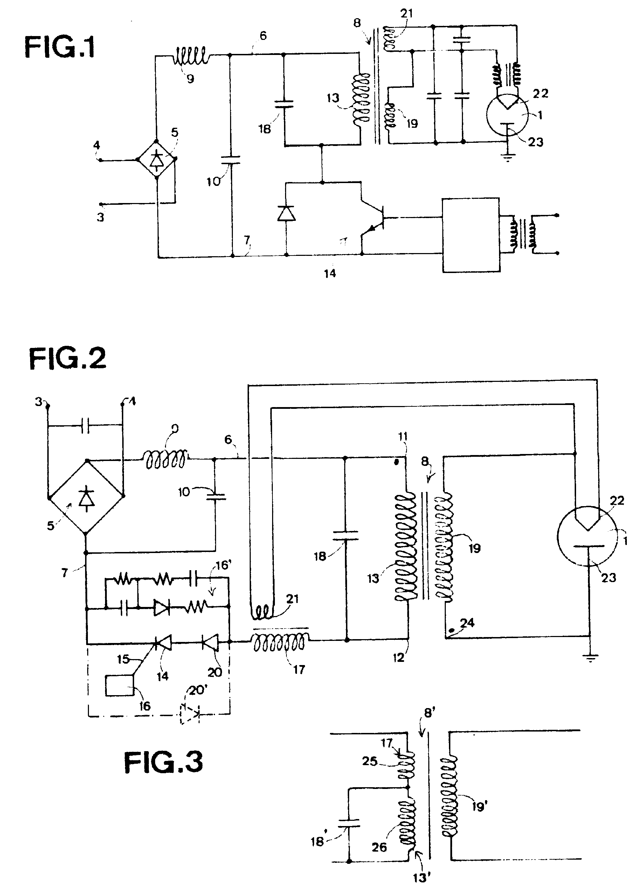

Pour remédier à certains de ces inconvénients, il a été proposé, par exemple, de réaliser un circuit d'alimentation du type ci-dessus, tel que décrit dans la demande de brevet européen N° 86106467 publiée sous le numéro 202579 et illustrée à la figure 1 de la présente demande (les différents composants sont identifiés avec les mêmes références que celles utilisées pour décrire la présente invention). Malheureusement, le fonctionnement de ce circuit n'est pas satisfaisant. En effet, le courant primaire circule principalement dans le transformateur et excite la résonance du circuit secondaire, ce qui oblige aussi à dimensionner le transformateur de façon à ce que le courant magnétisant élevé ne conduise pas à la saturation du circuit. D'autre part, si le condensateur secondaire dit de " by-pass" est de faible valeur et tel que les courants dans le condensateur et le magnétron sont du même ordre de grandeur, les tensions inverses sur le magnétron sont très élevées.

La présente invention a pour but de palier les insuffisances des circuits décrits ci-dessus.

Selon l'invention, un circuit d'alimentation du type mentionné précédemment, est plus particulièrement caractérisé en ce qu'il comporte en outre une self induction montée en série avec l'ensemble constitué par le condensateur et l'enroulement primaire, et en ce que ledit élément de commutation est constitué par un interrupteur unidirectionnel en courant, et l'enroulement secondaire dudit transformateur est relié directement à la charge unidirectionnelle.

Grâce à ce circuit, l'élément de commutation n'est pas surdimensionné et travaille avec de faibles pertes, de même les composants du circuit ne sont pas soumis à des tensions inverses élevées et le magnétron ne reçoit qu'un courant de valeur crête modérée.

Les caractéristiques et avantages de l'invention ressortiront d'ailleurs de la description qui va suivre, à titre d'exemple, en référence au dessin annexé dans lequel :

la figure 1 représente un schéma d'un circuit d'alimentation correspondant à l'art antérieur; la figure 2 représente un schéma du circuit d'alimentation selon l'invention; la figure 3 représente une variante d'une partie du circuit de la figure 2 dans laquelle le primaire du transformateur est formé de deux parties.

Dans l'exemple de réalisation décrit sur la figure 2, le circuit est destiné plus particulièrement à l'alimentation d'un magnétron 1 d'un four à micro-ondes à partir d'un réseau alternatif de distribution arrivant aux bornes 3 et 4 du circuit. Ces bornes 3 et 4 sont reliées à un redresseur 5 qui est formé par un pont de diodes double alternance et dont la sortie est branchée à deux lignes 6 et 7 d'alimentation d'un transformateur 8. Le redresseur 5 comporte en sortie un filtre d'antiparasitage constitué par une bobine d'arrêt 9 et d'un condensateur 10.

Les lignes 6 et 7 sont branchées respectivement aux extrémités 11 et 12 de l'enroulement primaire 13 du transformateur 8. Le sens relatif des enroulements du transformateur est dit "FORWARD". La ligne 7 comporte de façon connue en soi un élément de commutation 14 présentant une gâchette 15 reliée à un circuit de commande 16 ainsi qu'un dispositif d'aide à la commutation 16' dit "CALC".

Selon l'invention, le circuit comporte en outre un condensateur 18 branché en parallèle audit enroulement primaire 13, ainsi qu'une self induction 17 montée en série avec l'ensemble ainsi constitué par le condensateur 18 et l'enroulement primaire 13, et en ce que ledit élément de commutation 14 est constitué par un interrupteur unidirectionnel en courant, et l'enroulement secondaire 19 dudit transformateur 8 est relié directement au magnétron 1.

L'interrupteur unidirectionnel en courant est constitué par un "GTO". A la place de ce composant GTO, l'homme de l'art pourra utiliser et adapter par exemple les composants suivants "IGBT", "Thyristor", etc...

L'interrupteur unidirectionnel 14 est branché en série avec une diode 20 interdisant le courant inverse vers la source, assurant ainsi un meilleur rapport : courant moyen injecté sur courant efficace dans le circuit primaire. Cette diode 20 est choisie de manière à être assez rapide et de tension inverse suffisante (pratiquement de même valeur que la tension directe supportée par l'interrupteur 14).

Selon une variante schématisée en traits interrompus sur la figure 2, la diode 20 est remplacée par une diode "antiparallèle" 20' qui vient shunter l'interrupteur 14. Ce montage de la diode autorise le passage inverse du courant et permet ainsi d'éliminer notamment le circuit "CALC" 16'.

La self induction 17 est couplée à un enroulement secondaire 21, dit de chauffage, dont les extrémités sont reliées à l'élément chauffant 22 du magnétron 1 (cathode). L'anode 23 du magnétron 1 est reliée directement à l'extrémité 24 de l'enroulement secondaire 19, ainsi qu'à la masse.

Pour obtenir un fonctionnement régulier et fiable de ce circuit il faut que la fréquence de résonance série du circuit comprenant la self 17 et le condensateur 18 soit de l'ordre de 1,5 à 2 fois la fréquence de hachage de l'interrupteur 14, et la fréquence de résonance parallèle du transformateur accordé 8, dans le circuit comprenant le condensateur 18 et le transformateur 8 lorsque l'interrupteur est dans un état ouvert, soit inférieure à ladite fréquence de hachage. En outre, le transformateur doit présenter un coefficient de couplage de 0,6 à 0,8 et un rapport de transformation de 5 à 10.

En pratique, on a constaté que si l'on utilise un "GTO" avec une tension maximale directe de l'ordre de 800 Volts, un magnétron de tension de service de 4 Kilovolts, il faut prendre un rapport de transformation d'environ 7 et un coefficient de couplage de 0,7 à 0,8.

Selon la variante représentée à la figure 3, la self induction 17 est réalisée par une partie 25, dite première, de l'enroulement primaire 13' d'un transformateur 8' qui est faiblement couplée à l'autre partie 26 du primaire, dite seconde, et à l'enroulement secondaire 19', tandis qu'un condensateur 18' est branché en parallèle à la seconde partie 26 de l'enroulement primaire, la charge unidirectionnelle 1 étant reliée directement à l'enroulement secondaire 19' couplé faiblement avec les première et seconde parties de l'enroulement primaire 13'.

Pour obtenir un bon fonctionnement du circuit de cette variante, les régles de dimensionnement suivantes doivent être appliquées :
la fréquence de résonance série des première et seconde parties 25,26 de l'enroulement primaire 13' avec le condensateur 18' est de l'ordre de 1,5 à 2 fois la fréquence de hachage de l'interrupteur 14, et la fréquence de résonance parallèle est inférieure à ladite fréquence de hachage; le sens relatif des enroulements du primaire 13' et de l'enroulement secondaire 19' est dit "FORWARD" et le coefficient de couplage est compris entre 0,5 et 0,8 tandis que le rapport de transformation est compris entre 5 et 10.

On va décrire ci-après, notamment en référence à la figure 2, le fonctionnement du circuit d'alimentation du magnétron 1. L'alimentation alternative issue du réseau commercial aux bornes 3 et 4 est redressée par le pont de diodes double alternance 5, puis déparasitée par la bobine d'arrêt 9 et le condensateur de filtrage 10, et transmise aux lignes 6 et 7 afin d'alimenter, au moyen du fonctionnement en commutation (état ouvert/état fermé) de l'interrupteur unidirectionnel en courant 14, l'enroulement primaire 13 du transformateur 8 en un courant de haute fréquence. Ce courant de haute fréquence est lié aux impulsions de courant reçues par la gâchette 15 de l'interrupteur 14 et délivrées par le circuit de commande 16.

Si l'on considère qu'après un certain temps de fonctionnement le système est stationnaire lorsque l'interrupteur 14 est dans un état ouvert, le circuit, oscillant sur la fréquence de résonance parallèle, atteindra une tension voisine de la tension maximale de charge. A cet instant, l'interrupteur 14 passe en un état fermé. La tension aux bornes de l'interrupteur passe donc de la valeur de charge du condensateur 18 augmentée de la tension d'alimentation, à la valeur zéro, et le courant dans le circuit primaire est gouverné par la charge du condensateur 18 à travers la self 17. Ce courant passe par un maximum puis diminue jusqu'à zéro si la self du circuit du transformateur à fuite a une valeur suffisante, la durée de cette "arche" étant voisine de la demi-période de résonance série du circuit.

Durant cette phase, le condensateur 18 se décharge et se recharge en sens inverse, la tension à ses bornes étant inverse et de valeur égale à la valeur maximale considérée à l'instant initial, augmentée de la charge occasionnée par le courant dans l'interrupteur fermé.

Durant la phase suivante, le condensateur 18, par une décharge oscillante, envoie un courant dans le primaire 13 du transformateur 8 qui, étant du type "FORWARD" et grâce à l'enroulement secondaire de rapport de transformation élevé et de couplage faible, fournit au magnétron 1, un courant sans pointe excessive. Le magnétron 1 se met à conduire et l'intensité croit, gouvernée par la self qui limite la valeur de $\frac{di}{dt}$, et de ce fait élargit l'impulsion de courant dans le magnétron en augmentant également le temps de décroissance de celle-ci.

Comme expliqué précédemment, la diode série 20 peut être remplacée par la diode antiparallèle 20'. Dans ce cas, il est judicieux de choisir un transformateur ayant un coefficient de couplage de l'ordre de 0,6 et un rapport de transformation tel que le magnétron étant en fonctionnement, l'amortissement du circuit limite le courant inverse dans la diode 20' à une valeur faible devant le courant direct. Ainsi l'impulsion de courant issue de la source et identique dans sa partie positive est suivie d'une partie négative due à la décharge du condensateur 18 dans la source. Si l'amortissement du circuit résonnant parallèle est suffisant, la partie négative peut être réduite à une valeur négligeable et le fonctionnement du circuit est pratiquement identique à celui décrit pour la figure 2.
Comme l'homme de l'art le comprendra, le fonctionnement de la variante selon la figure 3 n'a pas besoin d'être décrite précisément puisqu'il est semblable à celui décrit pour la figure 2.

## Revendications

1. Circuit d'alimentation en tension continue ou redressée destiné à alimenter une charge unidirectionnelle en courant (1) telle que, par exemple, un magnétron et comprenant un transformateur (8) élévateur de tension à inductance de fuite élevée dont l'enroulement primaire (13) est monté en série avec un élément de commutation (14) destiné à hacher ladite tension à une certaine fréquence en réponse à une impulsion de commande appliquée à une gâchette (15) dudit élément de commutation, et dont l'enroulement secondaire (19) est destiné à être relié à ladite charge (1), ainsi qu'un condensateur (18) branché en parallèle audit enroulement primaire (13), **caractérisé en ce qu'**il comporte en outre une self induction (17) montée en série avec l'ensemble constitué par le condensateur (18) et l'enroulement primaire (13), et en ce que ledit élément de commutation (14) est constitué par un interrupteur unidirectionnel en courant, et l'enroulement secondaire (19) dudit transformateur (8) est relié directement à la charge (1).

2. Circuit d'alimentation selon la revendication 1, **caractérisé en ce que** la fréquence de résonance série du circuit comprenant la self (17) et le condensateur (18) est de l'ordre de 1,5 à 2 fois la fréquence de hachage de l'interrupteur (14) et la fréquence de résonance parallèle du transformateur accordé, dans le circuit comprenant le condensateur (18) et le transformateur (8) lorsque l'interrupteur (14) est dans un état ouvert, est inférieure à ladite fréquence de hachage.

3. Circuit d'alimentation selon la revendication 2 **caractérisé en ce que**, le sens relatif des enroulements (13 et 19) du transformateur (8) est dit "FORWARD".

4. Circuit d'alimentation selon l'une quelconque des revendications précédentes **caractérisé en ce que**, le transformateur (8) présente un coefficient de couplage de 0,6 à 0,8 et un rapport de transformation de 5 à 10.

5. Circuit d'alimentation selon la revendication 1, **caractérisé en ce que** la self induction (17) est réalisée par une partie (25), dite première, de l'enroulement primaire (13') d'un transformateur (8') qui est faiblement couplée à l'autre partie (26) du primaire, dite seconde, et à l'enroulement secondaire (19'), tandis qu'un condensateur (18') est branché en parallèle à la seconde partie (26) de l'enroulement primaire, la charge unidirectionnelle (1) étant reliée directement à l'enroulement secondaire (19') couplé faiblement avec les première et seconde parties de l'enroulement primaire (13').

6. Circuit d'alimentation selon la revendication 5, **caractérisé en ce que** la fréquence de résonance série des première et seconde parties (25,26) de l'enroulement primaire (13') avec le condensateur (18') est de l'ordre de 1,5 à 2 fois la fréquence de hachage de l'interrupteur (14), et la fréquence de résonance parallèle est inférieure à ladite fréquence de hachage.

7. Circuit selon la revendication 6, **caractérisé en ce que** le sens relatif des enroulements du primaire (13') et de l'enroulement secondaire (19') est dit "FORWARD" et le coefficient de couplage est compris entre 0,5 et 0,8 tandis que le rapport de transformation est compris entre 5 et 10.

8. Circuit selon l'une quelconque des revendications précédentes, **caractérisé en ce que** l'interrupteur unidirectionnel (14) est monté en série avec une diode (20).

9. Circuit selon l'une quelconque des revendications 1 à 3 **caractérisé en ce que** l'interrupteur unidirectionnel (14) est shunté par une diode antiparallèle 20'.

10. Circuit selon la revendication 9, **caractérisé en ce que** le transformateur a un coefficient de couplage de l'ordre de 0,6 et un rapport de transformation tel que le magnétron étant en fonctionnement, l'amortissement du circuit limite le courant inverse dans la diode antiparallèle 20' à une valeur faible devant le courant direct.

11. Circuit selon l'une quelconque des revendications précédentes, **caractérisé en ce que** l'interrupteur unidirectionnel (14) est un composant électronique du type "GTO".

## Patentansprüche

1. Versorgungskreis mit Gleichspannung oder gleichgerichteter Spannung zur Stromversorgung einer unidirektionalen Last (1) wie beispielsweise eines Magnetrons, der einen Aufwärtstransformator (8) mit erhöhter Streuinduktivität aufweist, dessen Primärwicklung (13) mit einem Umschaltelement (14) in Reihe geschaltet ist, das dazu bestimmt ist, die Spannung in Reaktion auf einen auf ein Gate (15) des Umschaltelements angelegten Impuls mit einer bestimmten Frequenz zu zerhacken, und dessen Sekundärwicklung (19) dazu bestimmt ist, mit der Last (1) verbunden zu werden, sowie einen Kondensator (18), der mit der Primärwicklung (13) parallelgeschaltet ist,
**dadurch gekennzeichnet, daß** er ferner eine Selbstinduktionsspule (17) aufweist, die in Reihe mit der Einheit geschaltet ist, die aus dem Kondensator (18) und der Primärwicklung (13) besteht, und daß das Umschaltelement (14) aus einem unidirektionalen Stromunterbrecher besteht, sowie daß die Sekundärwicklung (19) des Transformators (8) direkt mit der Last (1) verbunden ist.

2. Versorgungskreis nach Anspruch 1,
**dadurch gekennzeichnet, daß** die Reihenresonanzfrequenz des Kreises mit der Selbstinduktionsspule (17) und dem Kondensator (18) in der Größenordnung von 1,5- bis 2-mal der Zerhackerfrequenz des Unterbrechers (14) liegt und die Parallelresonanzfrequenz des abgestimmten Transformators in dem Kreis mit dem Kondenstor (18) und dem Transformator (8) unter der Zerhackerfrequenz liegt, wenn sich der Unterbrecher (14) im geöffneten Zustand befindet.

3. Versorgungskreis nach Anspruch 2,
**dadurch gekennzeichnet, daß** die Relativrichtung der Wicklungen (13 und 19) des Transformators (8) "FORWARD" heißt.

4. Versorgungskreis nach einem der vorhergehenden Ansprüche,
**dadurch gekennzeichnet, daß** der Transformator (8) einen Kopplungskoeffizienten von 0,6 bis 0,8 sowie ein Transformationsverhältnis von 5 bis 10 aufweist.

5. Versorgungskreis nach Anspruch 1,
**dadurch gekennzeichnet, daß** die Selbstinduktionsspule (17) durch einen sogenannten ersten Teil (25) der Primärwicklung (13') eines Transformators (8') realisiert ist, der mit dem anderen, dem sogenannten zweiten Teil (26) der Primärseite und der Sekundärwicklung (19') schwach gekoppelt ist, während ein Kondensator (18') parallel zu dem zweiten Teil (26) der Primärwicklung geschaltet ist, wobei die unidirektionale Last (1) direkt mit der Sekundärwicklung (19') verbunden ist, die schwach mit dem ersten und dem zweiten Teil der Primärwicklung (13') gekoppelt ist.

6. Versorgungskreis nach Anspruch 5,
**dadurch gekennzeichnet, daß** die Reihenresonanzfrequenz des ersten Teils (25) und des zweiten Teils (26) der Primärwicklung (13') mit dem Kondensator (18') in der Größenordnung von 1,5- bis 2-mal der Zerhackerfrequenz des Unterbrechers (14) liegt und die Parallelresonanzfrequenz unter der Zerhackerfrequenz liegt.

7. Kreis nach Anspruch 6,
**dadurch gekennzeichnet, daß** die Relativrichtung der Wicklungen der Primärseite (13') und der Sekundärwicklung (19') "FORWARD" heißt und der Kopplungskoeffizient zwischen 0,5 und 0,8 liegt, während das Transformationsverhältnis zwischen 5 und 10 liegt.

8. Kreis nach einem der vorhergehenden Ansprüche,
**dadurch gekennzeichnet, daß** der unidirektionale Unterbrecher (14) mit einer Diode (20) in Reihe geschaltet ist.

9. Kreis nach einem der Ansprüche 1 bis 3,
**dadurch gekennzeichnet, daß** der unidirektionale Unterbrecher (14) durch eine Antiparalleldiode (20') in Nebenschluß gelegt ist.

10. Kreis nach Anspruch 9,
**dadurch gekennzeichnet, daß** der Transformator einen Kopplungskoeffizienten in der Größenordnung von 0,6 und ein solches Transformationsverhältnis aufweist, daß bei Betrieb des Magnetrons die Dämpfung der Schaltung den Gegenstrom in der Antiparalleldiode 20' auf einen schwachen Wert vor dem Gleichstrom begrenzt.

11. Kreis nach einem der vorhergehenden Ansprüche,
**dadurch gekennzeichnet, daß** der unidirektionale Unterbrecher (14) ein elektronisches Bauteil des "GTO"-Typs ist.

## Claims

1. DC or rectified voltage supply circuit intended to supply a unidirectional load with current (1), such as, for example, a magnetron, and comprising a step-up transformer (8) with high leakage inductance whose primary winding (13) is wired in series with a switching component (14) intended to chop the said voltage at a certain frequency in response to a control pulse applied to a trigger (15) for the said switching component and whose secondary winding (19) is intended to be connected to the said load (1), and a capacitor connected in parallel with the said primary winding (13), characterised in that it also comprises an inductor (17) mounted in series with the assembly consisting of the capacitor (18) and primary winding (13), and in that the said switching component (14) consists of a unidirectional current interrupter, and the secondary winding (19) of the said transformer (8) is directly connected to the load (1).

2. Supply circuit according to Claim 1, characterised in that the series resonance frequency of the circuit comprising the inductor (17) and capacitor (18) is about 1.5 to 2 times the chopping frequency of the interrupter (14) and the parallel resonance frequency of the tuned transformer in the circuit comprising the capacitor (18) and transformer (8), when the interrupter (14) is in its open condition, is lower than the said chopping frequency.

3. Supply circuit according to Claim 1, characterised in that the relative direction of the windings (13 and 19) of the transformer (8) is termed "FORWARD".

4. Supply circuit according to any one of the preceding claims, characterised in that the transformer (8) has a coupling coefficient of 0.6 to 0.8 and a transformer ratio of 5 to 10.

5. Supply circuit according to Claim 1, characterised in that the inductor (17) is formed by a so-called first part (25) of the primary winding (13') of a transformer (8') which is weakly coupled to the other so-called second part (26) of the primary winding and to the secondary winding (19'), whilst a capacitor (18') is connected in parallel with the second part (26) of the primary winding, the unidirectional load (1) being directly connected to the secondary winding (19') weakly coupled with the first and second parts of the primary winding (13').

6. Supply circuit according to Claim 5, characterised in that the series resonance frequency of the first and second parts (25, 26) of the primary winding (13') with the capacitor (18') is about 1.5 to 2 times the chopping frequency of the interrupter (14), and the parallel resonance frequency is lower than the said chopping frequency.

7. Circuit according to Claim 6, characterised in that the relative direction of winding of the primary (13') and secondary 19' windings is "FORWARD" and the coupling coefficient is between 0.5 and 0.8 while the transformer ratio is between 5 and 10.

8. Circuit according to any one of the preceding claims, characterised in that the unidirectional interrupter (14) is mounted in series with a diode (20).

9. Circuit according to any one of Claims 1 to 3, characterised in that the unidirectional interrupter (14) is shunted by an anti-parallel diode (20').

10. Circuit according to Claim 9, characterised in that the transformer has a coupling coefficient of about 0.6 and a transformer ratio such that, with the magnetron in operation, the decay of the circuit limits the reverse current in the anti-parallel diode 20' to a low value relative to the forward current.

11. Circuit according to any one of the preceding claims, characterised in that the unidirectional interrupter (14) is an electronic component of the GTO type.

**FIG.1**

**FIG.2**

**FIG.3**